# EUROPEAN PATENT APPLICATION

(11) **EP 1 435 682 A1**
(43) Date of publication of application: **07.07.2004**
(21) Application number: 02800731.8
(22) Date of filing: 02.10.2002
(51) Int. Cl.: H02H 3/087, H02H 9/02, H02H 9/04

(54) **ELECTRONIC APPARATUS**

(30) Priority: 03.10.2001 JP 2001307254
(71) Applicant: MATSUSHITA ELECTRIC INDUSTRIAL CO., LTD., Kadoma-shi, Osaka 571-8501 (JP)
(72) Inventor: MORIMOTO, Koichi, Fukui-shi, Fukui 910-0015 (JP); TANAKA, Hideki, Higashiosaka-shi, Osaka 577-0802 (JP)
(74) Representative: Balsters, Robert
(86) International application number: PCT/JP2002/010262
(87) International publication number: WO 2003/032459

(57) **Abstract**

The electronic apparatus comprises a power terminal, and a protecting circuit, a power control circuit and a load circuit which are series-connected to the power terminal, and the protecting circuit includes an over-current protecting element series-connected to the power terminal, and a shorting circuit which is installed in the downstream of the over-current protecting element and serves to short-circuit the power supplied to the downstream. For example, the over-current protecting element uses a PTC thermistor or the like as a resistance element, and a Zener diode or the in-series body of a Zener diode, resistance, and a semiconductor switching element constitute the shorting circuit. By carrying out heat combination with the shorting circuit element, an over-current protecting element can speed up its operation against an over-current.

## Description

### TECHNICAL FIELD

The present invention relates to an electronic apparatus. Particularly, it relates to power supply in electronic apparatuses.

### BACKGROUND ART

A conventional electronic apparatus comprises a power terminal, protecting circuit, power control circuit, and load circuit. Power output from a converter (hereinafter referred to as AC/DC converter) for converting AC power to DC power is supplied to the power terminal of electronic apparatus. The power control circuit in the electronic apparatus converts the power received via the power terminal to a voltage suited for the load circuit, and the load circuit is driven by the voltage.

In the above example of prior art, there is a problem that the power control circuit and the load circuit are damaged when the voltage supplied is higher than the rated value. The protecting circuit has a current limit element such as a fuse. Despite that there is provided a current limit element, the power control circuit and the load circuit are damaged when a voltage higher than the rating is connected to the power terminal because of the following reasons.

Generally, since the charging current is about 0.4A to 1.0A, an element whose protecting operation current is about 0.5 to 1.5A is usually employed as a current limit element of the protecting circuit. And, in case 6V that is equivalent to a double voltage as against rated 3V is, for example, connected by mistake to the power terminal, then the flowing current will become two times higher than the rating. Suppose that the resistance of the load circuit is 20ohm or over, then the flowing current is 0.3A max. Since the flowing current of 0.3A is lower than the protecting operation current of the current limit element, even when a voltage two times higher than the rating is applied by mistake, the protecting circuit will not operate. Consequently, the power control circuit and the load circuit located in the downstream zone of the protecting circuit will be easily damaged.

The purpose of the present invention is to solve the above problem.

### DISCLOSURE OF THE INVENTION

The electronic apparatus of the present invention comprises:
a power terminal; and
a protecting circuit, a power control circuit and a load circuit which are series-connected to the power terminal in order,
wherein the protecting circuit includes an over-current protecting element series-connected to the power terminal, and a shorting circuit which is installed in the downstream zone of the over-current protecting element and serves to short-circuit the power supplied to the downstream.

The electronic apparatus of the present invention is able to prevent the power control circuit, the load circuit and the like located in the downstream from being damaged since the over-current protecting element and the shorting circuit will operate when a high voltage is applied by mistake.

### BRIEF DESCRIPTION OF THE DRAWINGS

Fig. 1 is a perspective view of the preferred embodiment 1.
Fig. 2 is a circuit block diagram of the preferred embodiment 1.
Fig. 3 is a circuit diagram of a protecting circuit of the preferred embodiment 1.
Fig. 4 is another circuit diagram of a protecting circuit of the preferred embodiment 1.
Fig. 5 is a side view showing the connection of PTC thermistor and Zener diode in the protecting circuit of the preferred embodiment 1.
Fig. 6 is a top view showing the connection of PTC thermistor and Zener diode in the protecting circuit of the preferred embodiment 1.
Fig. 7 is a circuit diagram of the preferred embodiment 2.
Fig 8 is another circuit diagram of the preferred embodiment 2.

### DETAILED DESCRIPTION OF PREFERRED EMBODIMENTS

### (Preferred embodiment 1)

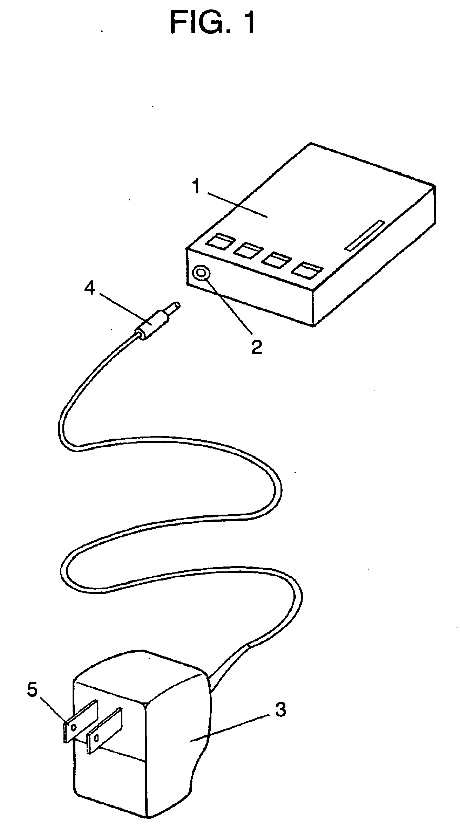

Fig. 1 is a perspective view of the preferred embodiment 1. In Fig. 1, power terminal 2 is disposed at the side of main body 1 of the electronic apparatus. Plug 4 of AC/DC converter 3 is inserted into the power terminal 2. The AC/DC converter 3 has plug 5 for commercial power input. (Hereafter, alternating current and direct current are called AC and DC respectively.)

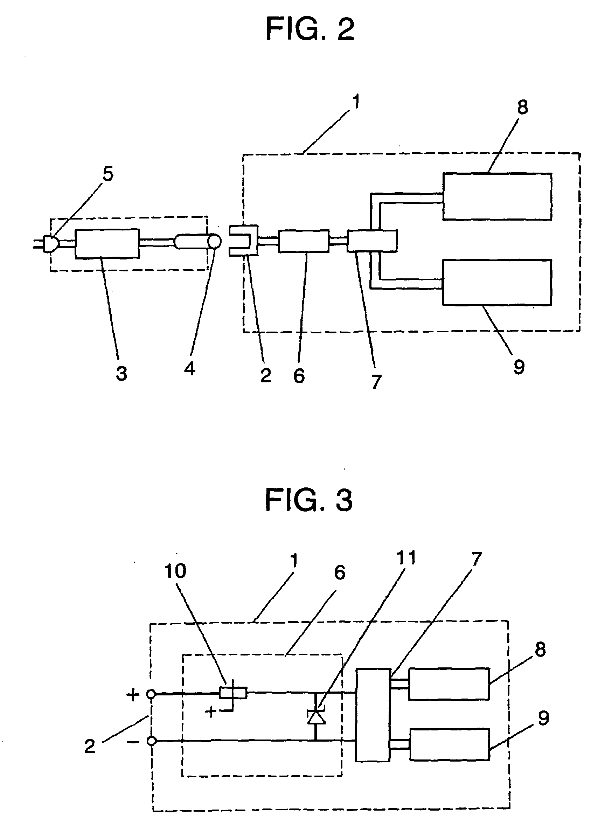

Fig. 2 is a circuit block diagram of the preferred embodiment 1. In Fig. 2, the AC/DC converter 3 converts commercial AC power supplied via the plug 5 to, for example, DC3V power and supplies the power to the power terminal 2 via the plug 4. To the power terminal 2 are connected protecting circuit 6, power control circuit 7, charger 8 and load circuit 9 sequentially in the direction of the downstream. Specifically, a voltage of DC3V supplied from the power terminal 2 is transferred to the downstream via the protecting circuit 6. The DC3V is lowered for example to DC1.2V by the power control circuit 7. When it is necessary to charge the charger 8, it is charged via the power control circuit 7. Also, when DC1.2V is directly supplied to the load circuit 9, the power control circuit 7 serves to supply DC1.2V to the load circuit 9. With the plug 4 not inserted into the power terminal 2, DC1.2V charged into the charger 8 is supplied to the load circuit 9 via the power control circuit 7.

Fig. 3 is a circuit diagram of the protecting circuit 6 of the preferred embodiment 1. In the figure, to the power terminal 2 is series-connected PTC thermistor 10 as an example of over-current protecting element. In the downstream of the PTC thermistor 10, for example, Zener diode 11 of breakdown voltage 4V is disposed so as to short-circuit the power terminal 2. The PTC thermistor 10 and Zener diode 11 configure the protecting circuit 6.

Suppose that DC6V equivalent to two times the rated input voltage is supplied by mistake from the plug 4 to the power terminal 2. Since the DC voltage then applied is higher than DC4V that is the breakdown voltage of the Zener diode 11, a short-circuit current flows, and it causes, for example, instantaneous flow of a large current of 10A or over. Thus, due to the large current, the PTC thermistor 10 is self-heated, changing to a high resistance value. Accordingly, the current flowing in main body 1 of the electronic apparatus is limited to a very small value. Also, most of the power voltage DC6V applied by mistake is divided to the PTC thermistor 10 changed to a high resistance. In this way, only a voltage lower than the rating is divided to other circuits. As a result, even when a high voltage is applied by mistake, only a voltage lower than the rated voltage is applied to the power control circuit 7.

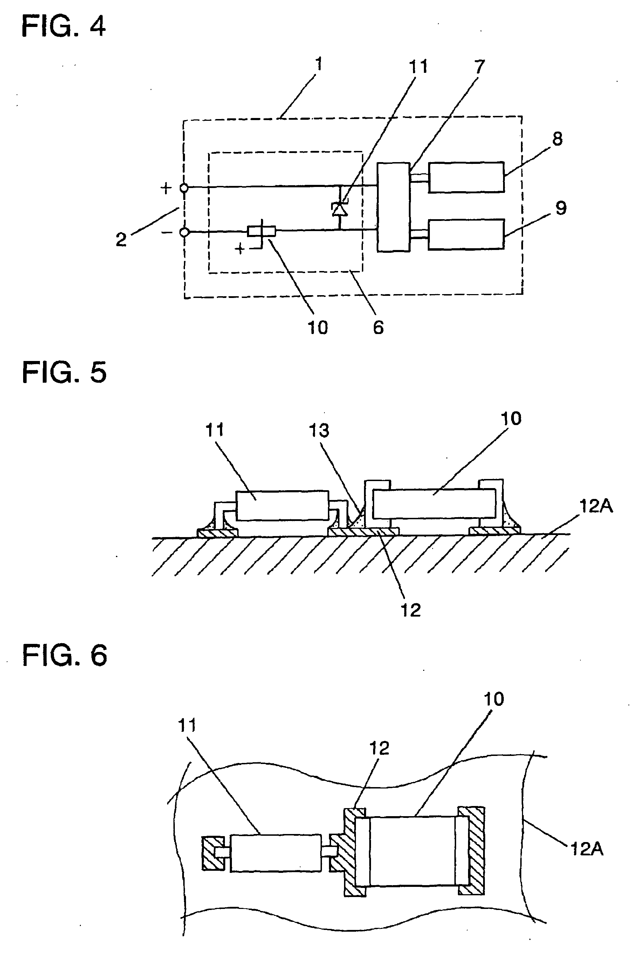

Fig. 4 is another circuit diagram of protecting circuit 6. In Fig. 3, the PTC thermistor 10 is disposed at the plus side of the power terminal 2, but in Fig. 4, the PTC thermistor 10 is disposed at the minus side of the power terminal 2. The PTC thermistor 10 and Zener diode 11 configure the protecting circuit 6. Even in this configuration, the operation obtained is the same as in Fig. 3.

Fig. 5 and Fig. 6 show the PTC thermistor 10 and Zener diode 11 shown in Fig. 3 and Fig. 4, both of which are thermally connected to each other. Fig. 5 is a side view showing a connected state of the PTC thermistor 10 and Zener diode 11 in the protecting circuit 6 shown in Fig. 3 and Fig. 4. Fig. 6 is a top view showing a mounted state of the PTC thermistor and Zener diode in the protecting circuit 6 shown in Fig. 3 and Fig. 4.

As shown in Fig. 5 and Fig. 6, the PTC thermistor 10 and Zener diode 11 are connected by solder 13 to one land 12 of printed circuit board 12A. With both of these disposed close to each other, the heat of Zener diode 11 generated due to a large current applied to the Zener diode 11 as a result of short-circuit mentioned earlier can be effectively transferred to the PTC thermistor 10 via the land 12 and the solder 13. As a result, the PTC thermistor 10 is increased in self-temperature and more quickly changes to a high resistance, attenuating the current and dividing the voltage faster. Accordingly, the protecting operations for the power control circuit 7, charger 8 and load circuit 9 become faster and assure safety.

Incidentally, the current value or voltage value mentioned in the above description is only an example, and the present invention is not limited to these values.

### (Preferred embodiment 2)

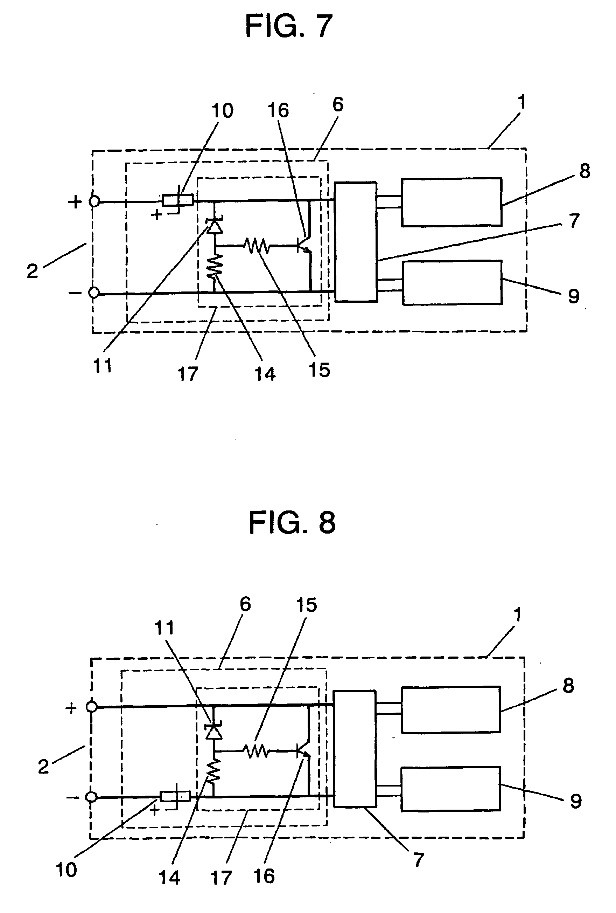

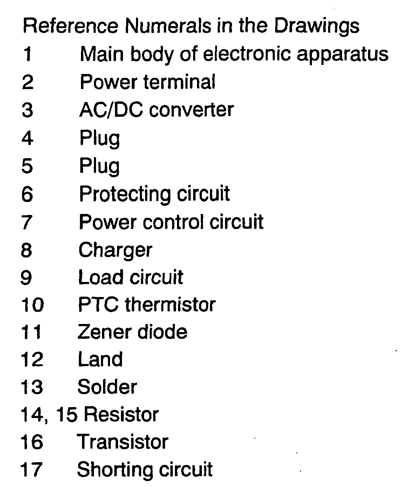

Fig. 7 is a circuit diagram of the preferred embodiment 2, and Fig. 8 is another circuit diagram of the preferred embodiment 2.

The preferred embodiment 2 shown in both figures is configured in that shorting circuit 17 in the downstream of PTC thermistor 10 comprises a series body of Zener diode 11 and resistor 14, and a transistor 16 connected to the connection of both of them via resistor 15. In both figures, the transistor 16 is used as an example of a semiconductor switching element.

In Fig. 7, when a voltage higher than the rating is applied, a current flows in the Zener diode 11, and potential difference is generated at the ends of resistor 14. That is, the potential at the connection of Zener diode 11 and resistor 14 is increased. The increased potential is applied to the base of transistor 16 via the resistor 15, making it conductive between the emitter and collector of the transistor 16. That is, the transistor 16 is turned ON. With the transistor 16 turned ON, short-circuit current may flow between the collector and emitter. In this way, the short-circuit current does not flow to the Zener diode 11 but to the transistor 16. Since the transistor 16 is higher in allowable capacity of current than the Zener diode 11, it is sometimes preferable to use transistor 16 for the purpose of applying the short-circuit current.

Also, in Fig. 7, the PTC thermistor 10 is disposed at the plus side of power terminal 2, and in Fig. 8, the PTC thermistor 10 is disposed in the minus side of power terminal 2. As shown in Fig. 8, even when the PTC thermistor 10 is disposed at the minus side, the operation obtained is the same as in Fig. 7.

In Fig. 7 and Fig. 8, transistor 16 is employed as an example of semiconductor switching element. The present invention is not limited to the transistor 16, and a similar configuration and effect can be obtained even in case of using other semiconductor switching element. When other semiconductor switching element is employed, the potential at the connection of the Zener diode 11 and the resistor 14 is supplied to the control terminal of the semiconductor switching element.

As described above, the electronic apparatus of the present invention has such effect that the power control circuit and the load circuit can be prevented from being damaged even when a voltage higher than the rating is applied by mistake.

Also, since the shorting circuit comprises only one Zener diode, the protecting circuit can be very simplified.

Also, because of using a Zener diode and semiconductor switching element, it is possible to obtain such effect that the shorting circuit is not required to use a highly heat dissipating element as a Zener diode. Semiconductor switching element is greater in allowable capacity of current as compared with a Zener diode, for example, like a transistor, and applying short-circuit current to the element causes less deterioration of the element and makes it easier to select the parts.

Also, with the over-current protecting element and the shorting circuit thermally coupled to each other, heat generated in the shorting circuit can be transferred to the over-current protecting circuit as the short-circuit current is applied thereto. Thus, the speed of operation against the over-current of the over-current protecting element can be increased.

Also, since the over-current protecting element and the Zener diode are coupled to each other via one land, the thermal coupling of both parts can be enhanced.

### INDUSTRIAL APPLICABILITY

The electronic apparatus of the present invention is able to prevent the power control circuit and the load circuit or the like in the electronic apparatus from being damaged even when a voltage higher than the rating is connected by mistake to the electronic apparatus. Also, the electronic apparatus of the present invention is easier in selection of parts and can be extremely simplified, assuring high reliability.

## Claims

1. An electronic apparatus comprising:
a power terminal; and
a protecting circuit, a power control circuit and a load circuit which are series-connected to the power terminal in order,
wherein the protecting circuit includes an over-current protecting element series-connected to the power terminal, and a shorting circuit which is installed in the downstream zone of the over-current protecting element and serves to short-circuit the power supplied to the downstream.

2. The electronic apparatus of claim 1, wherein the shorting circuit comprises a Zener diode.

3. The electronic apparatus of claim 1,
wherein the shorting circuit comprises a series body of a Zener diode and a resistor, and a semiconductor switching element;
wherein a control terminal of the semiconductor switching element is connected to the connection of the Zener diode and the resistor; and
wherein the semiconductor switching element serves to short-circuit the power supplied to the downstream.

4. The electronic apparatus of claim 1, wherein the over-current protecting element and the shorting circuit are thermally coupled to each other.

5. The electronic apparatus of claim 4, wherein the over-current protecting element and the Zener diode of the shorting circuit are connected to each other via one land.
